# EUROPEAN PATENT SPECIFICATION

(11) **EP 0 857 589 B1**
(45) Date of publication and mention of the grant of the patent: **20.11.2002**
(21) Application number: 98850015.3
(22) Date of filing: 04.02.1998
(51) Int. Cl.: E05B 67/36, E05B 73/00, B60R 25/00

(54) **Device for locking a female part to a male part**
Vorrichtung für die Verriegelung zweier ineinander steckbarer Teile
Dispositif pour le verrouillage d'un élément femelle à un élément mâle

(30) Priority: 06.02.1997 SE 9700404
(43) Date of publication of application: 12.08.1998
(73) Proprietor: Justermark, Christer, 615 93 Valdemarsvik (SE)
(72) Inventor: Justermark, Christer, 615 93 Valdemarsvik (SE)

(56) References cited:
- DE-A- 2 911 883
- DE-A- 3 049 470
- DE-C- 928 995

## Description

In different operations as for instance forestry and road construction heavy equipment is usually used. These operations often take place in remote and unwatched sites. When operations are not in progress, for instance during weekends and holidays, vehicles and equipment are left unwatched and as they represent large values they are subjected to theft and this cost the contractors and insurance companies large amounts of money yearly. Arrangements for effective watching will also cost a lot of money.
For this reason the best solution would be to make it impossible to remove vehicles and equipment during non-working periods.
A common way of obtaining this is to attach a lockable device comprising a male and a female part provided with flanges, which are applied in for instance a tow eyelet, and thereby prevent theft.
A different way is to chain equipment like detachable equipment for forestry, equipment for hydraulic shovels and tractors, trailers etc., to big trees, rocks or to chain more units together to one unwieldy unit. The locking device itself, to which the chains are attached, is preferably attached in a tow eyelet or fastening lug on a heavy vehicle.
The requirements for such devices to be able to prevent theft of vehicles or equipment are that they are provided with an effective locking device, made of a material which is difficult to cut through and which is designed and attached in a way that attempts to destroy the locking device will meet with practical obstacles. Many devices of this kind have been designed and show different qualities related to being effectively attached and of course to withstand destruction.

Some solutions disclose pad locks attached in a more or less accessible way. The disadvantage with such devices is that the device requires easy handling and attaching and it makes it relatively simple to get access to the locking device and open it with help of crow bars or cutting devices.

The American patent 4,440,005 discloses a device for a tow eyelet in which a male part and a female part, both with flanges, are threaded together in the eyelet. A lock cylinder is mounted in from outside the flange of the male part and fixed with a nut inside. When the key is turned the cylinder pushes a displaceable bar that move into one of different axially arranged grooves in the cylindrical, threaded inner wall of the female part. The device has several disadvantages with many small parts like a cam disc, a spring and a transversally moving locking bar. The lock cylinder is also unprotected at the key end.

A similar design is disclosed in US 4,186,575. This also comprises many small and weak parts and the lock cylinder is unprotected.

US 3,844,143 discloses a device in which a male and a female part are telescoped and tied together with a bolt accessible through an opening in the side of the female part. This design also has a lock cylinder with an unprotected key end. Locking takes place when the key is turned and a relatively weak locking bar is moved and prevents access to the bolt head. The disadvantage with this device is that the vital parts in the locking mechanism are accessible from the outside.

WO 93/16892 discloses a device in which a male part is passed through for instance a tow eyelet and a male part is inserted into the female part and extending underneath the tow eyelet. In the side of the female part there is an opening with a cross section that allows a lock cylinder to be put into it. The lower part of the male part also has an opening with the same cross section. To lock the device the two openings are matched and the lock cylinder is pushed through the female and male parts until it reaches the opposite wall of the female part. When the key is turned a locking bar prevents the lock cylinder to be retracted. Even this device has an unprotected lock cylinder with an exposed front side.

The object with the present invention is to eliminate the above disadvantages in the known devices and achieve a locking device with a minimum of movable parts of high-tensile steel and dimensioned to resist great forces.
Besides the parts are inaccessibly located inside the device. The lock cylinder will be mounted from the inside and as little as possible exposed at the key end.

These objects are achieved with a device characterised in that a female part has a flange with a from outside conical countersunk hole into which a cylindrical countersink from the inside into which the tapered part at the key end of a lock cylinder is inserted from inside and whose opposite end is fixed with screws to a fixing means attached to the inner surface of the female part and that a first spacer is placed between the lock cylinder and the fixing means and that a bar protruding from the opposite end of the lock cylinder is rotatably pivoted in a support means attached to a first retaining knob, fixed on the inside of the female part and in that a retaining segment is mounted on the bar close to the support means and that second spacers are placed between the retaining segment and the opposite end of the lock cylinder and that in the male part, on each side of a slot, with a width giving the retaining knob and the fixing means clearance and a length allowing the end of the male part to reach the inside of the flange of the female part, second retaining knobs are attached in such a distance from the end of the male part that the retaining segment, when a key is turned into a locking position, is rotated to a position between the first retaining knob and the second retaining knobs when the male part is inserted into the female part and reaches the inside of the flange of the female part.

A preferred embodiment will hereafter be described with references to the attached drawings on which
Fig. 1 shows a longitudinal section of a locking device unlocked and disassembled.
Fig. 2 shows a section A - A of a male part.
Fig. 3 shows a section B - B of a female part.

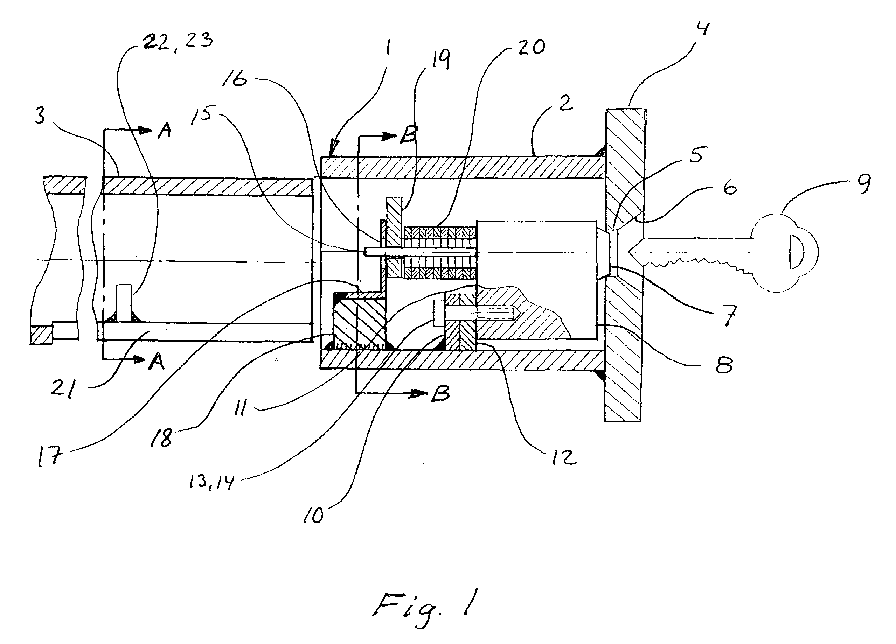

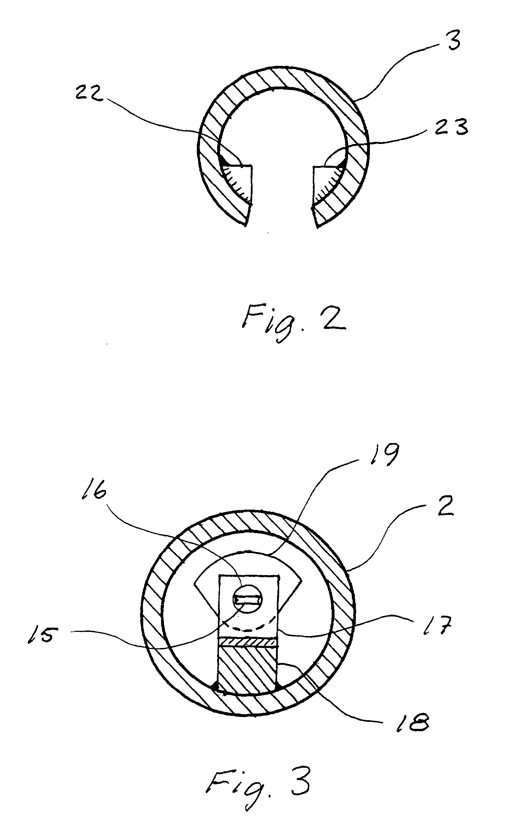

Fig. 1 shows a longitudinal section of a locking device comprising a female part 2 and a male part 3. A thick flange 4 is welded to the female part. The details are manufactured of a high tense, stainless steel with high hardness. The flange 4 of the female part 2 has a hole 5 with a conical countersink 6 from the outside. The diameter of the hole is less than the diameter of the tapered key end 7 of a lock cylinder 8 but large enough to allow a key 9 to be put into the lock cylinder. The tapered key end of the lock cylinder is inserted in the hole 5 from the inside. A fixing means 10 is welded to the inside of the female part a small distance from the opposite end 11 of the lock cylinder. The space between the fixing means 10 and the opposite end 11 of the lock cylinder is filled with a spacer 12 to centre the key end of the lock cylinder in the hole 5. The lock cylinder 8 is fixed to fixing means by two screws 13 and 14. A bar 15 protruding from the opposite end of the lock cylinder extends through a hole 16 in a support means 17, which is attached to a first retaining knob 18 near the end of and welded to the inside of the female part. On the bar 15, close to the support means 17, a retaining segment 19 is mounted, the shape of which is obvious from fig. 3. Spacers 12 fill the space between the opposite end of the lock cylinder and the support means. The male part 3 has a slot 21 of a width giving the first retaining knob 18 and the fixing means 10 clearance and a depth allowing the male part to reach the inside of the flange 4 of the female part when the male part is inserted in the female part.

Fig. 2 shows a section of the male part 3 in which two second retaining knobs 22 and 23 are fixed on each side of the slot 21 on such a distance from the end of the male part, that when it is inserted into the female part, the second retaining knobs will take a position which allows the retaining segment 19 to enter a position between the first retaining knob 18 and the second retaining knobs 22 and 23 when the key is turned into locking position. The male and female parts will then be in an interlocked position, which cannot be affected from the outside.

Within the scope of the invention the locking device can be made with male and female parts of different shapes, for instance rectangular or oval cross sections.
Inside the male part can for instance chains be attached by welding. It is also possible to attach chains or wires to the outside of the device by applying cylindrical fixing means around the device before it is assembled.

The use of the device is of course not limited to prevent theft of vehicles and equipment but can preferably be used to lock for instance industry and hangar ports. On the whole the device can be used to prevent burglary and theft on all places where it can be installed.

## Claims

1. Device for interlocking a preferably cylindrical female part (2) and a preferably cylindrical male part (3) in a locking device for trucks and heavy equipment, **characterised in that** a female part (2) has a flange (4) with a from outside conical countersunk through hole (5) into which the tapered part (7) at the key end of a lock cylinder (8) is inserted from inside and whose opposite end (11) is fixed with screws (13, 14) to a fixing means (10) attached to the inner surface of the female part and that a first spacer (12) is placed between the lock cylinder (8) and the fixing means (10) and that a bar (15) protruding from the opposite end of the lock cylinder is rotatably pivoted in a support means (17) attached to a first retaining knob (18) fixed on the inside of the female part and **in that** a retaining segment is mounted on the bar (19) close to the support means (17) and that second spacers (20) are placed between the retaining segment (19) and the opposite end of the lock cylinder (11) and that in the male part, on each side of a slot (21), with a width giving the retaining knob (18) and the fixing means clearance and a length allowing the end of the male part to reach the inside of the flange (4) of the female part, second retaining knobs (22, 23) are attached in such a distance from the end of the male part that the retaining segment (19), when a key (9) is turned into a locking position, is rotated to a position between the first retaining knob (18) and the second retaining knobs (22, 23) when the male part is inserted into the female part and reaches the inside of the flange (4) of the female part.

## Patentansprüche

1. Vorrichtung zum Verriegeln eines vorzugsweise zylindrischen Innen-Bauteils (2) mit einem vorzugsweise zylindrischen Außen-Bauteil (3) in einer Verriegelungseinrichtung für Lastwägen und schweres Gerät;
**dadurch gekennzeichnet, dass** das Innen Bauteil (2) einen Flansch (4) mit einem von außen konischen versenkten Durchgangsloch (5) aufweist, in das der sich verjüngende Abschnitt (7) am Schlüsselende eines Verriegelungs-Zylinders (8) von innen eingeführt wird, und dessen andere Ende (11) mit Schrauben (13, 14) an einer an der Innenfläche des Innen-Bauteils angebrachten Befestigungsvorrichtung (10) befestigt ist, und dass ein erster Abstandshalter (12) zwischen dem Verriegelungs-Zylinder (8) und der Befestigungsvorrichtung (10) angeordnet ist, und dass ein Stab (15), der über das gegenüberliegende Ende des Verriegelungs-Zylinders hinausragt, drehbar in einer Stützvorrichtung (17) gelagert ist, die an einer ersten, auf der Innenseite des Innen-Bauteils befestigten Rückhalte-Nase (18) gelagert ist, und dass ein Rückhaltesegment (19) auf dem Stab (15) in der Nähe der Stützvorrichtung (17) befestigt ist, und dass zweite Abstandshalter (20) zwischen dem Rückhalte-Segment (19) und dem gegenüberliegenden Ende des Verriegelungs-Zylinders (11) angeordnet sind, und dass in dem Außen-Bauteil auf beiden Seiten eines Schlitzes (21), der eine Weite besitzt, die der Rückhalte-Nase (18) und der Befestigungs-Vorrichtung (10) Spielraum läßt, sowie eine Länge besitzt, die es ermöglicht, dass das Ende des Außen-Bauteils die Innenseite des Flansches (4) des Innen-Bauteils erreicht, zweite Rückhalte-Nasen (22, 23) in einem derartigen Abstand von dem Ende des Außen-Bauteils angeordnet sind, dass das Rückhaltesegment (19) bei Drehung eines Schlüssels (9) in eine Verriegelungsposition in eine Position zwischen der ersten Rückhalte-Nase (18) und den zweiten Rückhalte-Nasen (22, 23) gedreht wird, wenn das Außen-Bauteil in das Innen-Bauteil eingeführt wird und die Innenseite des Flansches (4) des Innen-Bauteils erreicht.

## Revendications

1. Dispositif permettant de verrouiller entre elles une partie femelle (2), de préférence cylindrique, et une partie mâle (3), de préférence cylindrique, pour former un dispositif de verrouillage destiné aux camions et au matériel lourd,
**caractérisé par le fait qu'**une partie femelle (2) a un flasque (4), traversé de part en part par un trou (5) à fraisage conique partant de l'extérieur, dans lequel la partie effilée (7) située côté clé d'un cylindre (8) de verrouillage est introduite depuis l'intérieur, et dont l'extrémité opposée (11) est fixée par des vis (13, 14) à un moyen de fixation (10) lui-même attaché à la face interne de la partie femelle, **par le fait qu'**une première pièce d'écartement (12) est disposée entre le cylindre de verrouillage (8) et le moyen de fixation (10) et qu'une tige (15) sortant de l'extrémité opposée du cylindre de verrouillage pivote dans un moyen de support (17) qui est attaché à un premier tenon (18) de retenue fixé à l'intérieur de la partie femelle, **par le fait qu'**un segment (19) de retenue est monté sur la tige (15) à proximité du moyen de support (17), que d'autres pièces d'écartement (20) sont disposées entre le segment de retenue (19) et l'extrémité opposée du cylindre (11) de verrouillage, et que, dans la partie mâle, de chaque côté d'un passage oblong (21) dont la largeur permet le passage du tenon (18) de retenue et du moyen de fixation et dont la longueur permet à la partie mâle d'atteindre la face interne du flasque (4) de la partie femelle, d'autres tenons (22, 23) de retenue sont attachés à une distance de l'extrémité de la partie mâle telle que, lorsqu'on tourne une clé (9) en position de verrouillage, le segment de retenue (19) est tourné sur une position située entre le premier tenon (18) de retenue et les autres tenons (22, 23) de retenue quand la partie mâle entre dans la partie femelle et atteint l'intérieur du flasque (4) de la partie femelle.
